# FASCICULE DE BREVET EUROPEEN

(11) **EP 3 562 626 B1**
(45) Date de publication et mention de la délivrance du brevet: **03.02.2021**
(21) Numéro de dépôt: 17822714.6
(22) Date de dépôt: 28.12.2017
(51) Int. Cl.: B25J 9/00

(54) **SOUS-ENSEMBLE D'EXOSQUELETTE ET STRUCTURE D'EXOSQUELETTE INCLUANT UN TEL SOUS-ENSEMBLE**
EXOSKELETTUNTERANORDNUNG UND EXOSKELETTSTRUKTUR MIT SOLCH EINER UNTERANORDNUNG
EXOSKELETON SUB-ASSEMBLY AND EXOSKELETON STRUCTURE INCLUDING SUCH A SUB-ASSEMBLY

(30) Priorité: 29.12.2016 FR 1663510
(43) Date de publication de la demande: 06.11.2019
(73) Titulaire: Safran Electronics & Defense, 92100 Boulogne-Billancourt (FR); B-Temia Inc., St-Augustin-de-Desmaures, QC G3A 2J9 (CA)
(72) Inventeur: ZOSO, Nathaniel, St-Augustin-de-Desmaures, Québec G3A 2J9 (CA); SOUCY, Francisco, St-Augustin-de-Desmaures, Québec G3A 2J9 (CA); GRENIER, Jordane, 92100 Boulogne-Billancourt (FR); BAPTISTA, Jonathan, 92100 Boulogne-Billancourt (FR); BILODEAU, Katia, St-Augustin-de-Desmaures, Québec G3A 2J9 (CA)
(74) Mandataire: Regimbeau
(86) Numéro de dépôt international: PCT/EP2017/084743
(87) Numéro de publication internationale: WO 2018/122331

(56) Documents cités:
- EP-A1- 1 905 407
- EP-A2- 2 942 044
- US-A1- 2016 184 111

## Description

### DOMAINE DE L'INVENTION

L'invention concerne un sous-ensemble d'exosquelette et une structure d'exosquelette incluant un tel sous-ensemble.

Plus particulièrement, l'invention concerne un sous-ensemble d'exosquelette selon le préambule de la revendication 1.

### ETAT DE LA TECHNIQUE

Les exosquelettes d'assistance à l'effort sont des structures mécaniques positionnées en parallèle du squelette humain et qui permettent d'améliorer les capacités physiques du corps humain.

Il existe différents types d'exosquelettes, dont la forme et la structure dépendent des tâches à accomplir par l'utilisateur. Les deux principaux types d'exosquelettes sont ceux destinés à l'assistance aux mouvements de l'utilisateur d'une part, et ceux destinés à la démultiplication des capacités de force de l'utilisateur, d'autre part.

Dans le cas des exosquelettes destinés à l'assistance aux mouvements de l'utilisateur, l'utilisateur doit généralement transporter la structure de l'exosquelette puisque celle-ci est disposée sur son corps, ce qui a pour conséquence de limiter la liberté de mouvement de l'utilisateur et de générer une charge supplémentaire et de la fatigue associée.

Afin de soulager l'utilisateur, on connait des structures d'exosquelette dans lesquelles une partie de la masse de l'exosquelette est transférée au sol via des plaques disposées sous les pieds de l'utilisateur et reliées au reste de la structure.

Dans ces structures, les pieds de l'utilisateur ne sont pas en contact avec le sol, ce qui rend la structure peu confortable.

De plus, du fait de la présence des plaques, la mobilité de l'utilisateur est nécessairement réduite. Par ailleurs, afin d'assurer un transfert de la masse de l'exosquelette vers le sol, ces structures n'autorisent généralement pas pleinement une rotation du pied de l'utilisateur, et en particulier un mouvement de rotation interne/externe du pied de l'utilisateur par rapport à sa jambe.

Cela a pour conséquence que ce type de structure ne permet pas de procurer un appui sur le sol dans toutes les phases de marche et/ou sur tous types de sols, notamment lorsque l'utilisateur marche sur un sol en pente ou irrégulier.

Le document EP2 942 044 A2 montre un sous-ensemble d'exosquelette selon le préambule de la revendication 1.

### RESUME DE L'INVENTION

Un but de l'invention est de proposer une solution pour soulager l'utilisateur des charges qu'il porte, que ce soit la charge générée par la structure de l'exosquelette en elle-même, par des éléments externes pouvant être associés à la structure de l'exosquelette (par exemple un sac à dos) ou le poids même de l'utilisateur si celui-ci est porté par la structure, tout en présentant un meilleur confort et une meilleure mobilité.

Ce but est atteint dans le cadre de la présente invention grâce à un sous-ensemble d'exosquelette selon la revendication 1.

L'invention est basée sur le constat que, dans le corps humain, le mouvement de rotation interne/externe du pied n'est pas dû à la seule contribution de la cheville, mais également aux contributions d'autres articulations, notamment celles du genou et de la hanche.

Ainsi, dans le sous-ensemble d'exosquelette proposé, le segment tibial qui s'étend le long du tibia de l'utilisateur est formé en deux pièces, la première articulation étant disposée entre ces deux pièces et autorisant le mouvement de rotation interne/externe du pied de l'utilisateur.

Cette disposition de la première articulation entre le genou et la cheville de l'utilisateur permet au sous-ensemble d'exosquelette de s'adapter aux mouvements de rotation interne/externe du pied de l'utilisateur, améliorant de ce fait le confort et la mobilité de ce dernier.

Par ailleurs, la troisième articulation permet au sous-ensemble d'exosquelette de s'adapter aux mouvements d'éversion/inversion du pied de l'utilisateur, augmentant ainsi les degrés de liberté autorisés et contribuant également à améliorer le confort et la mobilité de ce dernier.

Le sous-ensemble peut en outre présenter les caractéristiques suivantes :
- le sous-ensemble comprend une deuxième articulation reliant la deuxième pièce à la partie de pied, la deuxième articulation autorisant une rotation de la partie de pied par rapport à la partie de jambe causée par un mouvement de flexion/extension du pied de l'utilisateur,
- la première articulation autorise une rotation de la deuxième pièce par rapport à la première pièce autour d'un premier axe de rotation, et la deuxième articulation autorise une rotation de la partie de pied par rapport à la deuxième pièce autour d'un deuxième axe de rotation, et le premier axe de rotation et le deuxième axe de rotation sont orthogonaux entre eux,
- la pièce d'attache comprend deux bras de fixation pour fixer la pièce d'attache sur la chaussure, les bras de fixation autorisant une flexion de la semelle de la chaussure selon deux lignes de pliures non parallèles,
- la pièce d'attache présente des fentes dans lesquelles peuvent être insérées des pions de fixation pour fixer la pièce d'attache sur la chaussure.

L'invention se rapporte également à une structure d'exosquelette comprenant au moins un sous-ensemble d'exosquelette tel que défini précédemment.

### PRESENTATION DES DESSINS

D'autres caractéristiques et avantages ressortiront encore de la description qui suit, laquelle est purement illustrative et non limitative et doit être lue en regard des figures annexées, parmi lesquelles :
- la figure 1 représente de manière schématique, en vue de face, un utilisateur équipé d'une structure d'exosquelette conforme à un mode de réalisation de l'invention,
- la figure 2 représente de manière schématique, en perspective, un sous-ensemble de la structure d'exosquelette de la figure 1,
- la figure 3 représente de manière schématique, en vue de côté, un sous-ensemble de la structure d'exosquelette de la figure 1,
- la figure 4 représente de manière schématique, en perspective, une variante de la pièce d'attache du sous-ensemble de la structure d'exosquelette de la figure 1,
- les figures 5A à 5C représentent de manière schématique un dispositif d'encliquetage permettant de verrouiller la pièce d'attache sur une chaussure.

### DESCRIPTION DETAILLEE D'UN MODE DE REALISATION

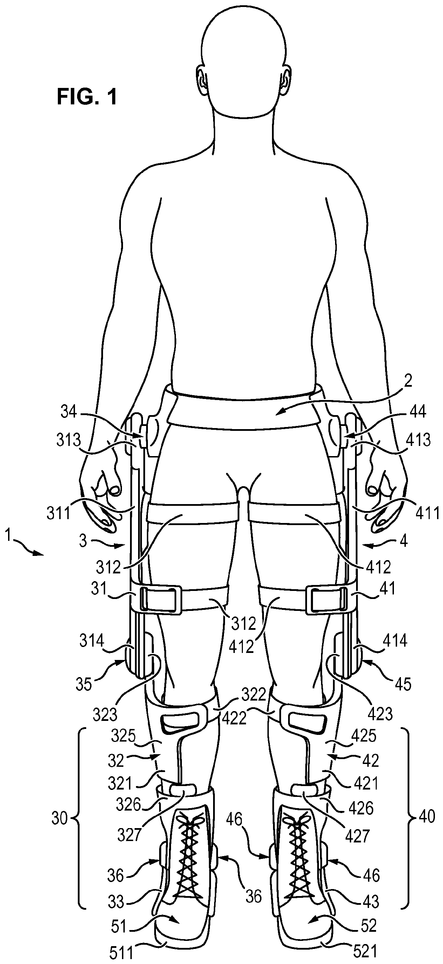

Sur la figure 1, la structure d'exosquelette 1 représentée comprend une ceinture ventrale 2, un premier ensemble mécanique 3 et un deuxième ensemble mécanique 4.

La ceinture ventrale 2 est propre à entourer le bas du tronc de l'utilisateur. Le premier ensemble mécanique 3 est propre à être relié à un premier membre inférieur de l'utilisateur (membre inférieur droit) pour assister le mouvement du premier membre inférieur lors de la marche ou de la course. Le deuxième ensemble mécanique 4 est propre à être relié à un deuxième membre inférieur de l'utilisateur (membre inférieur gauche) pour assister le mouvement du deuxième membre inférieur lors de la marche ou de la course. Le premier ensemble mécanique 3 et le deuxième ensemble mécanique 4 sont raccordés chacun à la ceinture ventrale 2.

Le premier ensemble mécanique 3 comprend une première partie de cuisse 31, une première partie de jambe 32 et une première partie de pied 33.

La première partie de cuisse 31 comprend un premier segment fémoral 311 prévu pour s'étendre le long d'une première cuisse (cuisse droite) de l'utilisateur et des sangles de fixation 312 propres à entourer la première cuisse de l'utilisateur pour fixer le segment fémoral 311 à la première cuisse.

La première partie de jambe 32 comprend un premier segment tibial 321 prévu pour s'étendre le long d'une première jambe (jambe droite) de l'utilisateur et des sangles de fixation 322 propres à entourer la première jambe de l'utilisateur pour fixer le segment tibial 321 à la première jambe.

La première partie de pied 33 est fixée à une première chaussure 51 de l'utilisateur, par exemple à une semelle 511 de la première chaussure 51. La première partie de pied 33 peut être fixée à la semelle 511 au moyen de vis ou par d'autres moyens de fixation appropriés.

Le premier segment fémoral 311 comprend une première extrémité 313 raccordée à la ceinture ventrale 2 par le biais d'une première articulation de hanche 34 et une deuxième extrémité 314 raccordée au premier segment tibial 321 par le biais d'une première articulation de genou 35.

Le premier segment tibial 321 comprend une première extrémité 323 raccordée au premier segment fémoral 311 par la première articulation de genou 35 et une deuxième extrémité 324 raccordée à la première partie de pied 33 par le biais d'une première articulation de cheville 36.

Comme cela est visible sur la figure 1, le premier segment tibial 321 est formé en deux pièces. Le premier segment tibial 321 comprend une première pièce 325 (ou pièce supérieure), une deuxième pièce 326 (ou pièce inférieure) et une première articulation 327 reliant la deuxième pièce 326 à la première pièce 325. La première pièce 325 est reliée à la première partie de cuisse 31 via l'articulation de genou 35. La deuxième pièce 326 est reliée à la première partie de pied 33 via l'articulation de cheville 36. La première articulation 327 reliant la deuxième pièce 326 à la première pièce 325 est agencée pour autoriser une rotation de la deuxième pièce 326 par rapport à la première pièce 325 causée par un mouvement de rotation interne/externe du pied droit de l'utilisateur par rapport à la jambe droite.

Le deuxième ensemble mécanique 4 est symétrique du premier ensemble mécanique 3.

Ainsi, le deuxième ensemble mécanique 4 comprend également une deuxième partie de cuisse 41, une deuxième partie de jambe 42 et une deuxième partie de pied 43.

La deuxième partie de cuisse 41 comprend un deuxième segment fémoral 411 prévu pour s'étendre le long d'une deuxième cuisse (cuisse gauche) de l'utilisateur et des sangles de fixation 412 propres à entourer la deuxième cuisse de l'utilisateur pour fixer le segment fémoral 411 à la deuxième cuisse.

La deuxième partie de jambe 42 comprend un deuxième segment tibial 421 prévu pour s'étendre le long d'une deuxième jambe (jambe gauche) de l'utilisateur et des sangles de fixation 422 propres à entourer la deuxième jambe de l'utilisateur pour fixer le segment tibial 421 à la deuxième jambe.

La deuxième partie de pied 43 est fixée à une deuxième chaussure 52 de l'utilisateur, par exemple à une semelle 521 de la chaussure 52. La deuxième pièce de pied 43 peut être fixée à la semelle 521 au moyen de vis.

Le deuxième segment fémoral 411 comprend une première extrémité 413 raccordée à la ceinture ventrale 2 par le biais d'une deuxième articulation de hanche 44 et une deuxième extrémité 414 raccordée au deuxième segment tibial 421 par le biais d'une deuxième articulation de genou 45.

Le deuxième segment tibial 421 comprend une première extrémité 423 raccordée au deuxième segment fémoral 411 par la deuxième articulation de genou 45 et une deuxième extrémité 424 raccordée à la deuxième partie de pied 43 par le biais d'une deuxième articulation de cheville 46.

Comme le premier segment tibial 321, le deuxième segment tibial 421 est également formé en deux pièces. Le deuxième segment tibial 421 comprend une première pièce 425 (ou pièce supérieure), une deuxième pièce 426 (ou pièce inférieure) et une première articulation 427 reliant la deuxième pièce 426 à la première pièce 425. La première pièce 425 est reliée à la deuxième partie de cuisse 41 via l'articulation de genou 45. La deuxième pièce 426 est reliée à la deuxième partie de pied 43 via l'articulation de cheville 46. La première articulation 427 reliant la deuxième pièce 426 à la première pièce 425 est agencée pour autoriser une rotation de la deuxième pièce 426 par rapport à la première pièce 425 causée par un mouvement de rotation interne/externe du pied gauche de l'utilisateur par rapport à la jambe gauche.

Les articulations de hanche 34, 44 et les articulations de genou 35, 45 peuvent comprendre des actionneurs permettant d'assister l'utilisateur lors d'un mouvement de flexion ou d'extension de la hanche ou du genou.

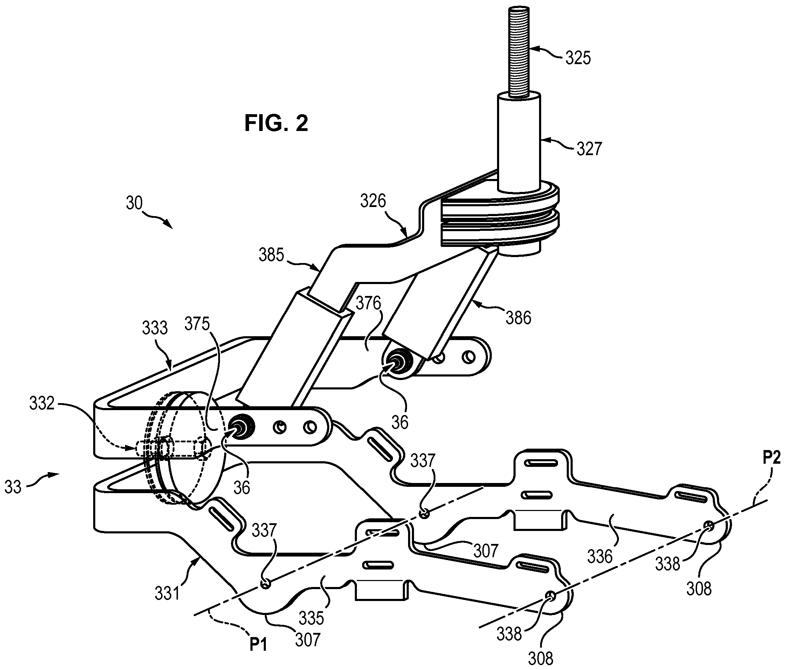

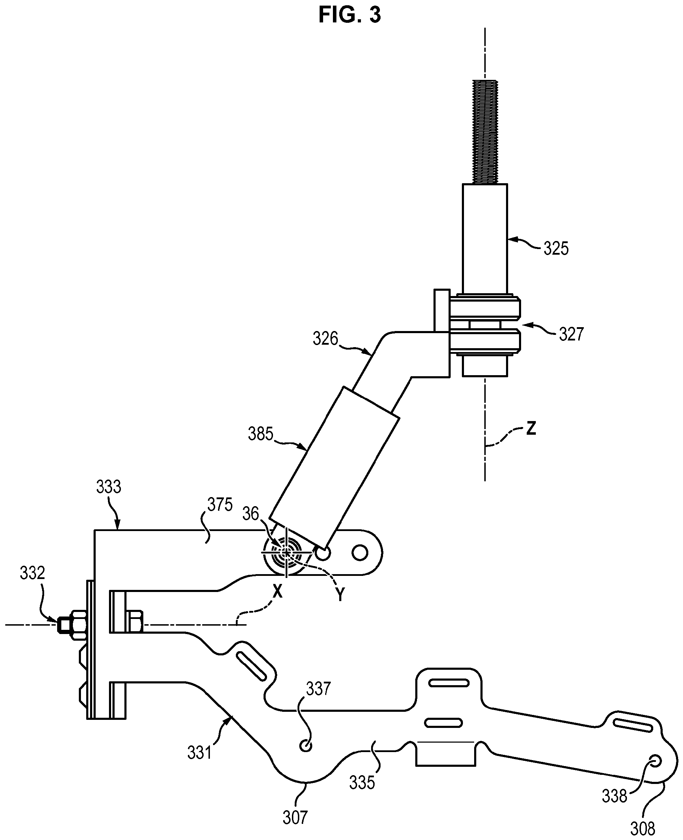

Les figures 2 et 3 représentent plus en détails un premier sous-ensemble d'exosquelette 30 comprenant la première partie de jambe 32, la première partie de pied 33 et la première articulation de cheville 36, conforme à un mode de réalisation de l'invention.

Il est à noter que le deuxième sous-ensemble d'exosquelette 40 comprenant la deuxième partie de jambe 42, la deuxième partie de pied 43 et la deuxième articulation de cheville 46 est symétrique du premier sous-ensemble d'exosquelette 30. Le deuxième sous-ensemble d'exosquelette 40 est donc formé d'éléments identiques ou similaires à ceux du premier sous-ensemble d'exosquelette 30, et fonctionne de la même manière que le premier sous-ensemble d'exosquelette 30.

Sur les figures 2 et 3, la première partie de pied 33 comprend une pièce d'attache 331, une articulation 332 et une pièce intermédiaire 333.

La pièce d'attache 331 est destinée à être fixée à la chaussure 51 de l'utilisateur. Plus précisément, la pièce d'attache 331 est prévue pour être fixée à la semelle 511 de la chaussure 51. A cet effet, la pièce d'attache 331 comprend deux bras 335 et 336 disposés pour s'étendre respectivement de part et d'autre de la chaussure 51, le long de la semelle 511 de la chaussure 51. Chaque bras 335, 336 présente deux orifices de fixation 337, 338 dans lesquels des organes de fixation (par exemple des vis) peuvent être insérés pour fixer le bras 335, 336 à la semelle 511. Les orifices de fixation 337 définissent des premiers points de fixation par lesquels passe une première ligne de pliure transversale P1 de la semelle 511 par rapport à la pièce d'attache 331. De même, les orifices 338 définissent des deuxièmes points de fixation par lesquels une deuxième ligne de pliure transversale P2 de la semelle 511 par rapport à la pièce d'attache 331. Du fait de la disposition des points de fixation, les bras 335 et 336 autorisent une flexion de la semelle 511 de la chaussure 51 selon deux lignes de pliures P1 et P2 non parallèles entre elles. En outre, les points de fixation correspondant aux orifices de fixation 337 sont agencés de sorte que la première ligne de pliure P1 s'étend sous le talon de l'utilisateur. Les points de fixation correspondant aux orifices de fixation 338 sont agencés de sorte que la deuxième ligne de pliure P2 s'étend sous les articulations des orteils de l'utilisateur. Ainsi, la semelle 511 de la chaussure se déforme en épousant les mouvements du pied de l'utilisateur pendant la marche de l'utilisateur. Cela permet d'éviter de gêner la marche de l'utilisateur.

En outre, chaque bras 335, 336 présente des portions 307 et 308 en saillie, s'étendant en dessous des orifices de fixation 337 et 338, chaque portion 307, 308 étant propre à venir en contact avec le sol afin de limiter l'écrasement de la semelle 511 à l'endroit des points de fixation des bras 335 et 336 à la semelle 511.

La pièce intermédiaire 333 est reliée à la pièce d'attache 331 par le biais de l'articulation 332. L'articulation 332 est disposée à l'arrière de la chaussure 51 de l'utilisateur, derrière le talon. L'articulation 332 autorise une rotation de la pièce d'attache 331 par rapport à la pièce intermédiaire 332 causée par un mouvement d'éversion/inversion du pied par rapport à la jambe de l'utilisateur. Autrement dit, l'articulation 332 autorise une rotation de la pièce d'attache 331 par rapport à la pièce intermédiaire 333 autour d'un axe de rotation X parallèle à un axe d'éversion/inversion du pied de l'utilisateur, lorsque la partie tibiale 32 est fixée à la jambe et que la partie de pied 33 est fixée au pied de l'utilisateur.

L'articulation 332 peut être constituée d'un ensemble de liaison tel que celui qui est décrit dans la demande de brevet français n°1657295 déposée le 28 juillet 2016.

Dans le mode de réalisation illustré sur les figures 2 et 3, la pièce intermédiaire 333 présente une forme générale de U. La pièce intermédiaire 333 comprend en particulier deux bras intermédiaires 375, 376 s'étendant respectivement de part et d'autre de la chaussure 51 de l'utilisateur.

La deuxième pièce 326 du segment tibial 32 présente également une forme générale de U. La deuxième pièce 326 comprend en particulier deux bras de liaison 385 et 386, chaque bras de liaison 385, 386 étant relié respectivement à l'un des bras intermédiaires 375, 376 de la pièce intermédiaire 333 par le biais d'une articulation de cheville 36.

Les articulations de cheville 36 autorisent une rotation de la pièce intermédiaire 333 par rapport à la deuxième pièce 326 du segment tibial 32 causée par un mouvement de flexion/extension du pied par rapport à la jambe. Autrement dit, les articulations de cheville 36 autorisent une rotation de la pièce intermédiaire 333 par rapport à la deuxième pièce 326 autour d'un axe de rotation Y parallèle à un axe de flexion/extension du pied de l'utilisateur, lorsque la partie tibiale 32 est fixée à la jambe et que la partie de pied 33 est fixée à la chaussure 51 de l'utilisateur.

Chaque articulation de cheville 36 peut être constituée d'un ensemble de liaison tel que celui qui est décrit dans la demande de brevet français n°1657295 déposée le 28 juillet 2016.

Il est à noter que chaque bras 385, 386 de la deuxième pièce 326 peut lui-même être formé en deux parties, dont une partie est coulissante par rapport à l'autre partie de manière à autoriser un réglage de la hauteur et profondeur de l'articulation 327 par rapport à l'articulation de cheville 36. Cela permet également de désolidariser rapidement la partie de pied 33 attachée à la chaussure 51 du reste de la structure d'exosquelette 1. L'utilisateur peut ainsi conserver ses chaussures 51 et 52, après avoir enlevé le reste de la structure d'exosquelette.

Enfin, la deuxième pièce 326 du segment tibial 32 est reliée à la première pièce 325 du segment tibial 32 par le biais de l'articulation 327. L'articulation 327 est disposée devant la jambe de l'utilisateur lorsque la partie tibiale 32 est fixée à la jambe et que la partie de pied 33 est fixée à la chaussure 51 de l'utilisateur. L'articulation 327 autorise une rotation de la deuxième pièce 326 par rapport à la première pièce 325 autour d'un axe de rotation Z qui est parallèle à un axe de rotation interne/externe du pied de l'utilisateur (direction sensiblement verticale lorsque l'utilisateur se tient en position debout).

Par ailleurs, l'axe de rotation Z de l'articulation 327 est orthogonal avec l'axe de rotation Y des articulations de cheville 36. L'articulation 327 peut être orientée de sorte que l'axe de rotation Z est concourant avec l'axe de rotation Y des articulations de cheville 36. Cela signifie que l'axe de rotation Z coupe l'axe de rotation Y.

Le sous-ensemble 30 illustré sur les figures 2 et 3 autorise ainsi une rotation du pied droit de l'utilisateur par rapport à la jambe droite selon trois degrés de liberté.

La disposition des axes de rotation X, Y et Z permet au sous-ensemble d'exosquelette de s'adapter aux mouvements du pied de l'utilisateur, améliorant de ce fait le confort et la mobilité de ce dernier.

De même, le sous-ensemble 40 autorise une rotation du pied gauche de l'utilisateur par rapport à la jambe gauche selon trois degrés de liberté.

Par ailleurs, la disposition des pivots 36 de chaque côté de la cheville de l'utilisateur permet d'équilibrer la charge qui s'applique sur le pivot 332 situé derrière le talon de l'utilisateur.

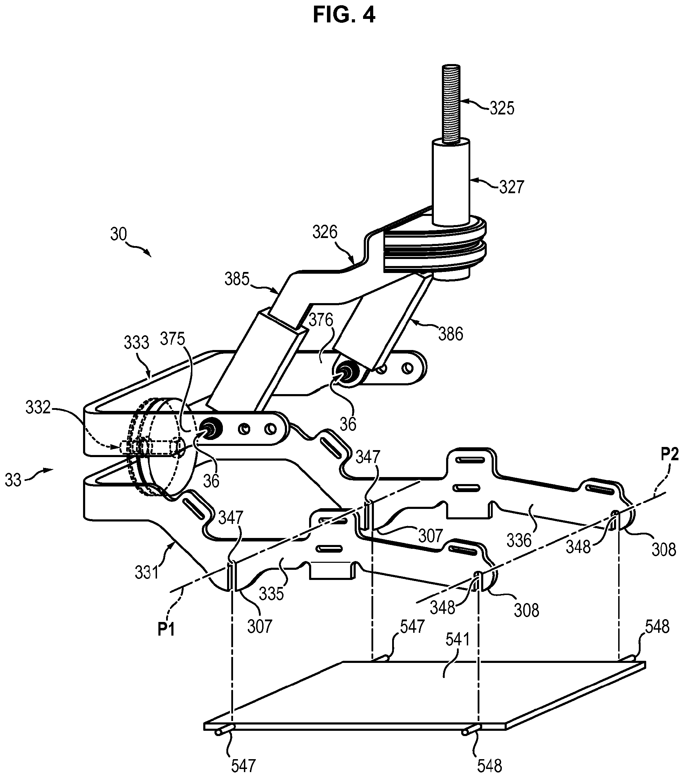

La figure 4 représente de manière schématique une variante de la pièce d'attache 331.

Dans cette variante, la semelle 511 de la chaussure 51 est munie d'une plaque de fixation 541. La plaque de fixation 541 peut être noyée dans la semelle de la chaussure 51. La plaque de fixation 541 présente des pions de fixation 547, 548 s'étendant à partir des bords latéraux de la plaque 541 et faisant saillie de part et d'autre de la semelle.

Chaque bras 335, 336 de la pièce d'attache 331 présente deux fentes de fixation 347, 348 dans lesquelles des pions de fixation 547, 548 peuvent être insérés verticalement pour fixer le bras 335, 336 à la semelle 511.

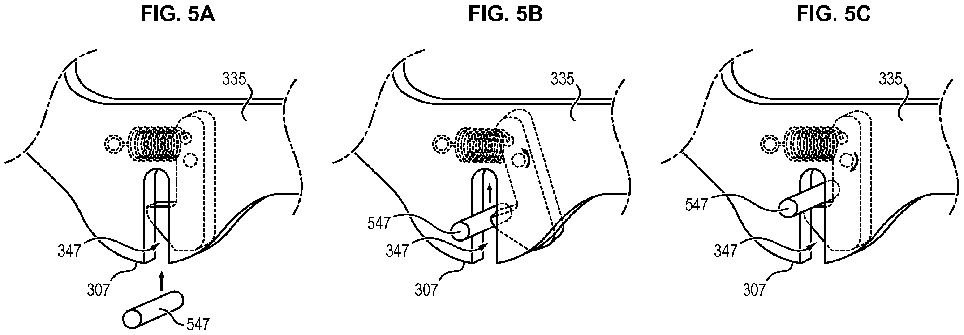

Chaque fente de fixation 347 et 348 peut être munie d'un dispositif d'encliquetage permettant de verrouiller les pions de fixation 547, 548 dans les fentes de fixation 347, 348. Les figures 5A à 5C illustrent de manière schématique un exemple de dispositif d'encliquetage, à crochet et ressort, permettant de verrouiller un pion de fixation 547 dans une fente de fixation 347.

Les fentes de fixation 347, 348 et les pions de fixation 547, 548, ainsi que les éventuels dispositifs d'encliquetage, permettent un accrochage et un décrochage rapide de la partie de pied 33 à la chaussure 51.

## Revendications

1. Sous-ensemble d'exosquelette (30) comprenant :
- une partie de jambe (32) propre à être attachée à une jambe d'un utilisateur, et
- une partie de pied (33) comprenant une pièce d'attache (331) propre à être attachée à une chaussure de l'utilisateur,
dans lequel la partie de jambe (32) comprend un segment tibial (321) s'étendant sous le genou, le long du tibia de l'utilisateur, lorsque la partie de jambe (32) est attachée à la jambe, le segment tibial (321) comprenant une première pièce (325), une deuxième pièce (326) reliée à la partie de pied (33), et une première articulation (327) reliant la deuxième pièce (326) à la première pièce (325), la première articulation (327) autorisant une rotation de la deuxième pièce (326) par rapport à la première pièce (325) causée par un mouvement de rotation interne/externe du pied de l'utilisateur par rapport à la jambe,
**caractérisé en ce que**
la partie de pied (33) comprend une pièce intermédiaire (333) reliée à la deuxième pièce (326) de la partie de jambe (32), et une troisième articulation (332) reliant la pièce intermédiaire (333) à la pièce d'attache (331), la troisième articulation (332) autorisant une rotation de la pièce d'attache (331) par rapport à la pièce intermédiaire (333) causée par un mouvement d'éversion/inversion du pied de l'utilisateur par rapport à la jambe.

2. Sous-ensemble selon la revendication 1, comprenant une deuxième articulation (36) reliant la deuxième pièce (326) à la partie de pied (33), la deuxième articulation (36) autorisant une rotation de la partie de pied (33) par rapport à la partie de jambe (32) causée par un mouvement de flexion/extension du pied de l'utilisateur par rapport à la jambe.

3. Sous-ensemble selon la revendication 2, dans lequel la première articulation (327) autorise une rotation de la deuxième pièce (326) par rapport à la première pièce (325) autour d'un premier axe de rotation (Z), et la deuxième articulation (36) autorise une rotation de la partie de pied (33) par rapport à la deuxième pièce (326) autour d'un deuxième axe de rotation (Y), et le premier axe de rotation (Z) et le deuxième axe de rotation (Y) sont orthogonaux entre eux.

4. Sous-ensemble selon l'une des revendications 1 à 3, dans lequel la pièce d'attache (331) comprend deux bras de fixation (335, 336) pour fixer la pièce d'attache (331) sur la chaussure (51), les bras de fixation (335, 336) autorisant une flexion de la semelle (511) de la chaussure (51) selon deux lignes de pliures (P1, P2) non parallèles.

5. Sous-ensemble selon l'une des revendications 1 à 4, dans lequel a pièce d'attache (331) présente des fentes (347, 348) dans lesquelles peuvent être insérées des pions de fixation (547, 548) pour fixer la pièce d'attache (331) sur la chaussure (51).

6. Structure d'exosquelette (1) comprenant au moins un sous-ensemble d'exosquelette (30, 40) conforme à l'une des revendications 1 à 5.

## Patentansprüche

1. Exoskelett-Unteranordnung (30), umfassend:
- einen Beinabschnitt (32), der imstande ist, an einem Bein eines Benutzers befestigt zu sein, und
- einen Fußabschnitt (33), der ein Befestigungsteil (331) umfasst, das imstande ist, an einem Schuh des Benutzers befestigt zu sein,
wobei der Beinabschnitt (32) ein Schienbeinsegment (321) umfasst, das sich unter dem Knie entlang des Schienbeins des Benutzers erstreckt, wenn der Beinabschnitt (32) am Bein befestigt ist, wobei das Schienbeinsegment (321) ein erstes Teil (325) umfasst, ein zweites Teil (326), das mit dem Fußabschnitt (33) verbunden ist, und ein erstes Gelenk (327), das das zweite Teil (326) mit dem ersten Teil (325) verbindet, wobei das erste Gelenk (327) eine Rotation des zweiten Teils (326) in Bezug auf das erste Teil (325) gestattet, die von einer internen/externen Rotationsbewegung des Fußes des Benutzers in Bezug auf das Bein verursacht wird,
**dadurch gekennzeichnet, dass**
der Fußabschnitt (33) ein Zwischenteil (333) umfasst, das mit dem zweiten Teil (326) des Beinabschnitts (32) verbunden ist, und ein drittes Gelenk (332), das das Zwischenteil (333) mit dem Befestigungsteil (331) verbindet, wobei das dritte Gelenk (332) eine Rotation des Befestigungsteils (331) in Bezug auf das Zwischenteil (333) gestattet, die von einer Auswärts-/Einwärtsbewegung des Fußes des Benutzers in Bezug auf das Bein verursacht wird.

2. Unteranordnung nach Anspruch 1, umfassend ein zweites Gelenk (36), das das zweite Teil (326) mit dem Fußabschnitt (33) verbindet, wobei das zweite Gelenk (36) eine Rotation des Fußabschnitts (33) in Bezug auf den Beinabschnitt (32) gestattet, die von einer Beuge/Streckbewegung des Fußes des Benutzers in Bezug auf das Bein verursacht wird.

3. Unteranordnung nach Anspruch 2, wobei das erste Gelenk (327) eine Rotation des zweiten Teils (326) in Bezug auf das erste Teil (325) um eine erste Rotationsachse (Z) gestattet und das zweite Gelenk (36) eine Rotation des Fußabschnitts (33) in Bezug auf das zweite Teil (326) um eine zweite Rotationsachse (Y) gestattet und die erste Rotationsachse (Z) und die zweite Rotationsachse (Y) zueinander orthogonal sind.

4. Unteranordnung nach einem der Ansprüche 1 bis 3, wobei das Befestigungsteil (331) zwei Befestigungsarme (335, 336) umfasst, um das Befestigungsteil (331) auf dem Schuh (51) zu befestigen, wobei die Befestigungsarme (335, 336) eine Beugung der Sohle (511) des Schuhs (51) gemäß zwei nicht parallelen Faltlinien (P1, P2) gestatten.

5. Unteranordnung nach einem der Ansprüche 1 bis 4, wobei das Befestigungsteil (331) Schlitze (347, 348) aufweist, in die Befestigungsstifte (547, 548) eingesetzt werden können, um das Befestigungsteil (331) auf dem Schuh (51) zu befestigen.

6. Exoskelettstruktur (1), umfassend mindestens eine Exoskelett-Unteranordnung (30, 40) nach einem der Ansprüche 1 bis 5.

## Claims

1. An exoskeleton sub-assembly (30) comprising:
- a leg portion (32) adapted to be attached to a leg of a user, and
- a foot portion (33) comprising an attachment part (331) adapted to be attached to a shoe of the user,
wherein the leg portion (32) comprises a tibial segment (321) extending below the knee, along the user's tibia, when the leg portion (32) is attached to the leg, the tibial segment (321) comprising a first part (325), a second part (326) connected to the foot portion (33), and a first joint (327) connecting the second part (326) to the first part (325), the first joint (327) allowing a rotation of the second part (326) relative to the first part (325) caused by an internal/external rotational movement of the user's foot relative to the leg,
**characterized in that**
the foot portion (33) comprises an intermediate part (333) connected to the second part (326) of the leg portion (32), and a third joint (332) connecting the intermediate part (333) to the attachment part (331), the third joint (332) allowing a rotation of the attachment part (331) relative to the intermediate part (333) caused by an eversion/inversion movement of the user's foot relative to the leg.

2. The sub-assembly according to claim 1, comprising a second joint (36) connecting the second part (326) to the foot portion (33), the second joint (36) allowing a rotation of the foot portion (33) relative to the leg portion (32) caused by a flexion/extension movement of the user's foot relative to the leg.

3. The sub-assembly according to claim 2, wherein the first joint (327) allows a rotation of the second part (326) relative to the first part (325) about a first axis of rotation (Z), and the second joint (36) allows a rotation of the foot portion (33) relative to the second part (326) about a second axis of rotation (Y), and the first axis of rotation (Z) and the second axis of rotation (Y) are orthogonal to each other.

4. The sub-assembly according to any of claims 1 to 3, wherein the attachment part (331) comprises two fastening arms (335, 336) for fastening the attachment part (331) on the shoe (51), the fastening arms (335, 336) allowing a flexion of the sole (511) of the shoe (51) along two non-parallel fold lines (P1, P2).

5. The sub-assembly according to any of claims 1 to 4, wherein an attachment part (331) has slots (347, 348) in which fastening pins (547, 548) can be inserted for fastening the attachment part (331) on the shoe (51) .

6. An exoskeleton structure (1) comprising at least one exoskeleton sub-assembly (30, 40) according to any of claims 1 to 5.
